# FASCICULE DE BREVET EUROPEEN

(11) **EP 0 919 170 B1**
(45) Date de publication et mention de la délivrance du brevet: **29.01.2003**
(21) Numéro de dépôt: 98420218.4
(22) Date de dépôt: 30.11.1998
(51) Int. Cl.: A47J 31/06

(54) **Porte-filtre pour cafétière du type expresso**
Filterträger für eine Kaffeemaschine vom Espresso-Typ
Filter carrier for an espresso type coffee machine

(30) Priorité: 01.12.1997 FR 9715346
(43) Date de publication de la demande: 02.06.1999
(73) Titulaire: SEB S.A., 69130 Ecully (FR)
(72) Inventeur: Pessin, Olivier, 69340 Francheville (FR); Ligneau, Vincent, 69780 Mions (FR)

(56) Documents cités:
- EP-A- 0 459 323
- EP-A- 0 515 245
- WO-A-97/26815

## Description

La présente invention concerne un porte-filtre pour cafetière du type expresso.

On sait que le porte-filtre d'une cafetière du type ci-dessus comprend un récipient destiné à recevoir la mouture de café dont le fond comporte au moins une ouverture d'écoulement du café boisson.

Dans ce porte-filtre, de l'eau chaude est introduite sous pression.

En traversant la mouture de café, l'eau chaude se charge des extraits de café et des arômes et sort de l'ouverture du fond sous la forme de café boisson crémeux.

La crème du café est obtenue : soit au moyen de dispositifs dissociant la filtration de la montée en pression dans le porte-filtre et la création de la crème, soit au moyen de dispositifs associant la filtration à la montée en pression dans le porte-filtre et la création de la crème.

Les dispositifs du premier type ci-dessus sont décrits dans les brevets européen 0 459 323, français 2 636 828 et allemand 30 35 157.

Dans ces réalisations, le fond du porte-filtre comprend une paroi filtrante.

Dans le dispositif décrit dans le brevet européen 0 459 323, une lame métallique flexible obture au repos l'ouverture d'écoulement du café. A partir d'une certaine pression, la lame dégage l'ouverture et le flux de café boisson s'écrase contre une cloison agencée autour de la lame flexible.

Dans le dispositif décrit dans le brevet français 2 636 828, il est prévu un disque élastique qui se déforme au-delà d'une certaine pression.

Dans le dispositif décrit dans le brevet allemand 30 35 157, le café boisson s'écoule par un clapet à bille ou cône monté sur un ressort.

Les dispositifs du second type ci-dessus, sont décrits dans les brevets français 2 676 658 et 2 655 529.

Dans ces réalisations, le récipient du porte-filtre ne comprend pas de paroi filtrante.

La filtration et la crème sont obtenues par une série de lamelles élastiques (brevet français 2 676 658) ou par un orifice ménagé dans une pièce élastique dont la section de passage varie en fonction de la pression (brevet 2 655 529).

Le but de la présente invention est d'améliorer la qualité du café produit dans une cafetière du type expresso en créant un porte-filtre comportant un dispositif permettant :
- d'obtenir la pression nécessaire afin d'extraire de la mouture de café tout l'arôme du café ;
- d'obtenir une crème de café abondante, dense, persistante et colorée.

Un autre but de la présente invention est de proposer un porte-filtre de construction simple, de réalisation facile, d'assemblage aisé, d'un coût réduit et de fonctionnement efficace.

L'invention vise ainsi un porte-filtre pour cafetière du type expresso comprenant un récipient destiné à recevoir la mouture de café dont le fond comporte au moins une ouverture pour l'écoulement du café au-dessus de laquelle s'étend une paroi filtrante pour retenir la mouture de café.

Suivant l'invention, ce porte-filtre est caractérisé en ce que cette paroi filtrante est séparée dudit fond par un organe comportant au moins une protubérance engagée, de façon sensiblement étanche, dans une passage d'écoulement du café pratiquée dans une paroi en matière élastiquement déformable sous l'effet de la pression engendrée à l'intérieur du récipient.

L'ouverture créée par la déformation de la paroi en matière élastique permet d'obtenir un jet laminaire de café boisson s'écoulant à grande vitesse et produisant une crème de café abondante, onctueuse, dense et persistante.

Selon une version préférée de l'invention, ladite paroi en matière élastiquement déformable est en métal.

De préférence, ledit organe est en matière synthétique.

Selon une version avantageuse de l'invention, ledit organe a la forme générale d'un disque et présente deux protubérances sensiblement coniques, diamétralement opposées, engagées chacune dans une passage d'écoulement du café pratiquée dans ladite paroi en matière élastiquement déformable.

On obtient ainsi deux jets laminaires séparés de café boisson.

De préférence également, la paroi filtrante et ledit organe sont fixés au fend du récipient par une vis centrale.

D'autres particularités et avantages de l'invention apparaîtront encore dans la description ci-après.

Aux dessins annexés, donnés à titre d'exemples non limitatifs :
- la figure 1 est une vue en coupe axiale d'un porte-filtre selon l'invention ;
- la figure 2 est une vue de dessus du support de filtre du porte-filtre selon la figure 1 ;
- la figure 3 est une vue à échelle agrandie de la partie centrale de la figure 1, illustrant le fonctionnement ;
- la figure 4 est une vue analogue à la figure 1 concernant une variante ;
- la figure 5 est une vue de dessus du support de filtre du porte-filtre selon la figure 4.

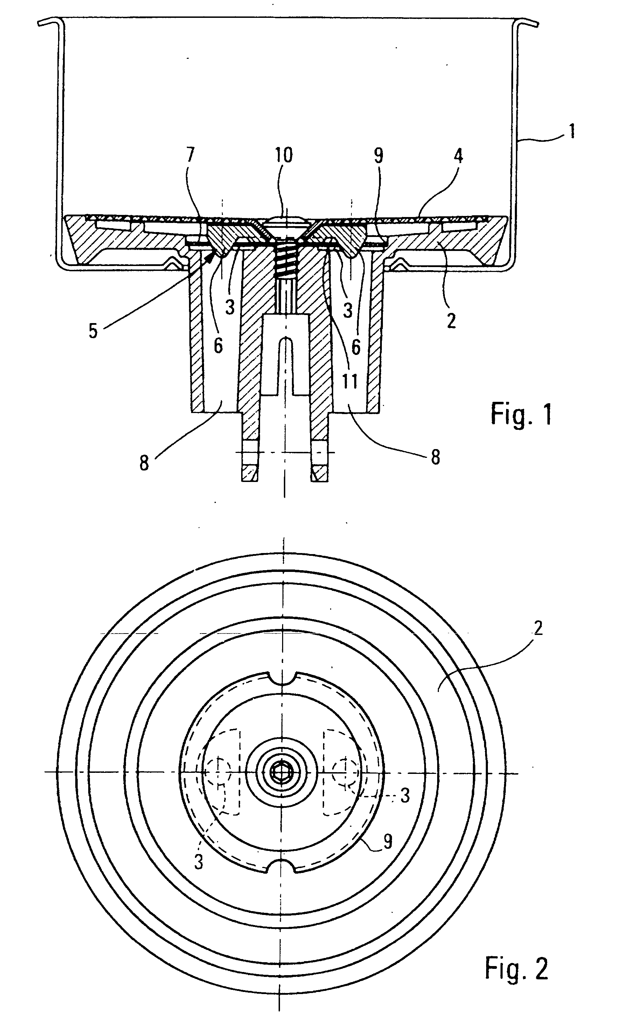

Dans la réalisation représentée sur la figure 1, le porte-filtre pour cafetière du type expresso comprend un récipient 1 destiné à recevoir la mouture de café dont le fond porte un support de filtre 2 comportant au moins une ouverture 3 pour l'écoulement du café. Au-dessus du support de filtre 2 s'étend une paroi filtrante 4, en forme de disque, retenant la mouture de café.

Conformément à l'invention, la paroi filtrante 4 est séparée du support de filtre 2 par un organe 5 comportant au moins une protubérance 6 engagée, de façon sensiblement étanche, dans une ouverture 3 d'écoulement du café. Cette ouverture 3 est pratiquée dans une paroi 7 en forme de disque ou membrane en matière élastiquement déformable sous l'effet de la pression engendrée à l'intérieur du récipient 1.

Cette paroi 7 en matière élastiquement déformable est de préférence en métal tel que l'acier inoxydable.

L'organe 5 est de préférence en matière synthétique, ledit organe étant de préférence sensiblement rigide.

Dans l'exemple représenté, l'organe 5 a la forme générale d'un disque et présente deux protubérances 6 sensiblement coniques, diamétralement opposées, engagées chacune dans une ouverture circulaire 3 d'écoulement du café pratiquée dans la paroi 7 en matière élastiquement déformable.

Les ouvertures 3 d'écoulement sont prolongées vers le bas par des tubulures 8.

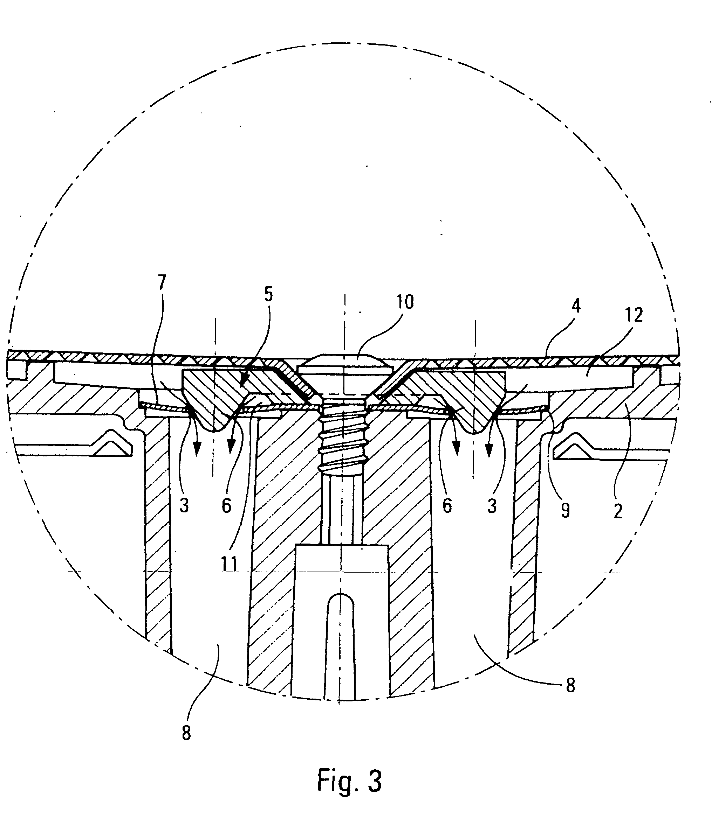

Dans l'exemple de la figure 1, la paroi 7 en matière élastiquement déformable est un disque inséré dans un épaulement annulaire 9 ménagé dans la partie centrale du support de filtre 2 du récipient 1 (voir également la figure 3).

Par ailleurs, la paroi filtrante 4 et l'organe 5 sont fixés au support de filtre 2 du récipient par une vis centrale 10.

D'autre part, entre les deux protubérances 6 et le centre de l'organe 5 en forme de disque, est ménagé un espace libre 11 ouvert vers la paroi 7 en matière élastiquement déformable.

Par ailleurs, la surface du support de filtre 2, en regard de la paroi filtrante 4, est légèrement évasée vers le haut.

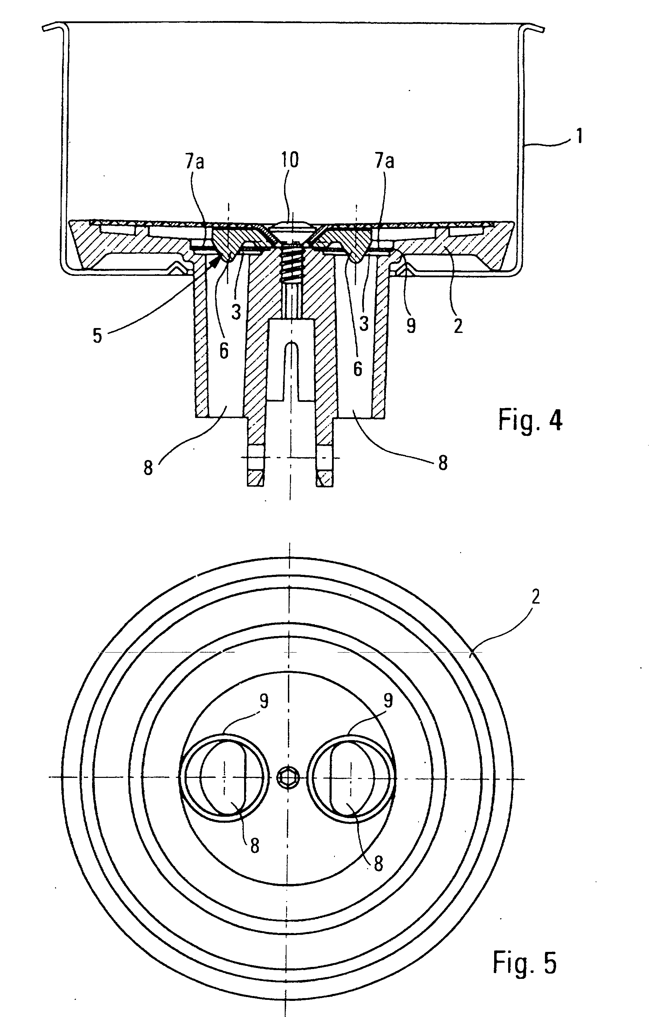

La variante représentée sur les figures 4 et 5 diffère de celle illustrée par les figures 1 à 3 par le fait que la paroi en matière élastiquement déformable est constituée par deux disques distincts 7a comportant chacun une ouverture 3 dans laquelle est engagée une protubérance conique 6 de l'organe 5.

On va maintenant expliquer en référence à la figure 3, le fonctionnement du dispositif que l'on vient de décrire.

Lors du fonctionnement de la cafetière expresso, l'eau chaude traverse la mouture de café reposant sur le disque filtrant 4 et se charge des extraits et arôme de café.

Le disque filtrant 4 retient la mouture de café et laisse passer le café boisson. Ce café boisson remplit l'espace 12 entourant l'organe 5 comportant les protubérances coniques 6.

Les protubérances 6 engagées de façon étanche dans les ouvertures 3 de la paroi élastique 7 empêchent l'écoulement du café par ces ouvertures 3.

Lors du fonctionnement de la cafetière, la pression hydraulique monte progressivement dans l'espace 12 ci-dessus.

Lorsque cette pression atteint environ 6 fois celle de la pression atmosphérique, la paroi 7 se déforme vers le bas et laisse passer le café boisson par les ouvertures annulaires 3 créées autour des protubérances 6.

Le café boisson s'écoule ainsi dans les tubulures 8 suivant deux jets laminaires verticaux, selon une direction sensiblement parallèle à l'axe de l'une ou l'autre desdites tubulures.

Au passage, le café boisson est laminé entre la paroi 7 et les protubérances 6. Ce laminage créé une brusque dépression et une émulsion qui engendre une crème abondante, onctueuse et persistante, très appréciée par les consommateurs.

Bien entendu, l'invention n'est pas limitée aux exemples que l'on vient de décrire.

Ainsi, les protubérances 6 pourraient être sphériques ou elliptiques. Aussi, la paroi 7 peut être en une pièce ou en plusieurs pièces, indépendamment du nombre des protubérances utilisées.

## Revendications

1. Porte-filtre pour cafetière du type expresso comprenant un récipient (1) destiné à recevoir la mouture de café dont le fond (2) comporte au moins une ouverture (3) pour l'écoulement du café au-dessus de laquelle s'étend une paroi filtrante (4) pour retenir la mouture de café, **caractérisé en ce que** cette paroi filtrante (4) est séparée dudit fond (2) par un organe (5) comportant au moins une protubérance (6) engagée de façon sensiblement étanche, dans une passage d'écoulement du café pratiquée dans une paroi (7) en matière élastiquement déformable sous l'effet de la pression engendrée à l'intérieur du récipient (1).

2. Porte-filtre conforme à la revendication 1, **caractérisé en ce que** ladite paroi (7) en matière élastiquement déformable est en métal.

3. Porte-filtre conforme à l'une des revendications 1 ou 2, **caractérisé en ce que** ledit organe (5) est en matière synthétique.

4. Porte-filtre conforme à l'une des revendications 1 à 3, **caractérisé en ce que** ledit organe (5) a la forme générale d'un disque et présente deux protubérances (6) sensiblement coniques, diamétralement opposées, engagées chacune dans une passage d'écoulement du café pratiquée dans ladite paroi (7) en matière élastiquement déformable.

5. Porte-filtre conforme à la revendication 2, **caractérisé en ce que** ladite paroi (7) en matière élastiquement déformable est un disque inséré dans un épaulement annulaire (9) ménagé dans la partie centrale du fond (2) du récipient.

6. Porte-filtre conforme à l'une des revendications 1 à 5, **caractérisé en ce que** la paroi filtrante (4) et ledit organe (5) sont fixés au fond (2) du récipient (1) par une vis centrale (10).

7. Porte-filtre conforme à l'une des revendications 4 à 6, **caractérisé en ce qu'**entre les deux protubérances (6) et le centre dudit organe (5) en forme de disque est ménagé un espace libre (11) ouvert vers ladite paroi (7) en matière élastiquement déformable.

8. Porte-filtre conforme à l'une des revendications 1 à 7, **caractérisé en ce que** le fond (2) du récipient est légèrement évasé vers le haut.

## Patentansprüche

1. Filterträger für eine Kaffeemaschine vom Typ Espresso, mit einem Behälter (1) zur Aufnahme des Kaffeemahlguts, dessen Boden (2) mindestens eine Öffnung (3) für das Abfließen des Kaffees aufweist, oberhalb derer sich eine filtrierende Wand (4) erstreckt, um das Mahlgut festzuhalten, **dadurch gekennzeichnet, daß** diese filtrierende Wand (4) vom Boden (2) durch ein Organ (5) getrennt, das mindestens einen Vorsprung (6) aufweist, der in im wesentlichen dichter Weise in einen Durchgang zum Abfließen des Kaffees eingreift, der in einer Wand (7) ausgebildet ist, welche aus einem Material besteht, das unter der Wirkung des innerhalb des Behälters (1) erzeugten Drucks elastisch verformbar ist.

2. Filterträger nach Anspruch 1, **dadurch gekennzeichnet, daß** die Wand (7) aus einem elastisch verformbaren Material aus Metall besteht.

3. Filterträger nach Anspruch 1 oder 2, **dadurch gekennzeichnet, daß** das Organ (5) aus Kunststoff besteht.

4. Filterträger nach einem der Ansprüche 1 bis 3, **dadurch gekennzeichnet, daß** das Organ (5) allgemein scheibenförmig ist und zwei im wesentlichen konische, einander diametral entgegengesetzte Vorsprünge (6) aufweist, die jeweils in einen Durchgang zum Abfließen des Kaffees eingreifen, der in der aus elastisch verformbaren Material bestehenden Wand ausgebildet ist.

5. Filterträger nach Anspruch 2, **dadurch gekennzeichnet, daß** die Wand (7) aus elastisch verformbaren Material eine Scheibe ist, die in eine Ringschulter (9) eingesetzt ist, die im mittleren Teil des Bodens (2) des Behälters ausgebildet ist.

6. Filterträger nach einem der Ansprüche 1 bis 5, **dadurch gekennzeichnet, daß** die filtrierende Wand (4) und das Organ (5) am Boden (2) des Behälters (1) mittels einer mittigen Schraube (10) befestigt sind.

7. Filterträger nach einem der Ansprüche 4 bis 6, **dadurch gekennzeichnet, daß** zwischen den beiden Vorsprüngen (6) und der Mitte des scheibenförmigen Organs (5) ein Freiraum ausgebildet ist (11), der zu der Wand (7) aus elastisch verformbaren Material offen ist.

8. Filterträger nach einem der Ansprüche 1 bis 7, **dadurch gekennzeichnet, daß** der Boden (2) des Behälters leicht nach oben erweitert ist

## Claims

1. A filter carrier for an expresso type coffee maker, the filter carrier comprising a receptacle (1) for receiving ground coffee and having a bottom (2) which includes at least one coffee outflow opening (3) above which there extends a filtering wall (4) for retaining the ground coffee, the filter carrier being **characterized in that** said filtering wall (4) is separated from said bottom (2) by a member (5) having at least one projection (6) engaged in substantially leaktight manner in a coffee outflow passage formed in a wall (7) of material that is elastically deformable under the effect of pressure generated inside the receptacle (1).

2. A filter carrier according to claim 1, **characterized in that** said wall (7) of elastically deformable material is made of metal.

3. A filter carrier according to claim 1 or claim 2, **characterized in that** said member (5) is of synthetic material.

4. A filter carrier according to any one of claims 1 to 3, **characterized in that** said member (5) is generally in the form of a disk and presents two substantially conical projections (6) that are diametrically opposite, each being engaged in a coffee outflow passage formed in said wall (7) of elastically deformable material.

5. A filter carrier according to claim 2, **characterized in that** said wall (7) of elastically deformable material is a disk inserted in an annular shoulder (9) formed in the central portion of the bottom (2) of the receptacle.

6. A filter carrier according to any one of claims 1 to 5, **characterized in that** the filtering wall (4) and said member (5) are fixed to the bottom (2) of the receptacle (1) by a central screw (10).

7. A filter carrier according to any one of claims 4 to 6, **characterized in that** an empty space (11) is provided between the two projections (6) and the center of said disk-shaped member (5), the empty space being open towards said wall (7) of elastically deformable material.

8. A filter carrier according to any one of claims 1 to 7, **characterized in that** the bottom (2) of the receptacle flares slightly in an upward direction.
